Europäisches Patentamt

European Patent Office

Office européen des brevets

(11) Veröffentlichungsnummer: **0 019 747
B1**

# (12) EUROPÄISCHE PATENTSCHRIFT

(45) Veröffentlichungstag der Patentschrift:
12.10.83

(21) Anmeldenummer: 80102438.1

(22) Anmeldetag: 05.05.80

(51) Int. Cl.³: **B 23 K 11/24**

(54) Geregelter Schweisstakter.

(30) Priorität: 14.05.79 DE 2919360

(43) Veröffentlichungstag der Anmeldung:
10.12.80 Patentblatt 80/25

(45) Bekanntmachung des Hinweises auf die Patenterteilung:
12.10.83 Patentblatt 83/41

(84) Benannte Vertragsstaaten:
AT BE CH FR GB IT LI LU NL SE

(56) Entgegenhaltungen:
DE-A-1 440 437
DE-A-1 906 858
DE-A-2 003 034
DE-A-2 151 019
GB-A-1 281 500
SU-A-173 355

(73) Patentinhaber: **SIEMENS AKTIENGESELLSCHAFT,
Berlin und München Wittelsbacherplatz 2,
D-8000 München 2 (DE)**

(72) Erfinder: **Hoestermann, Karl-Ernst, Dipl.-Ing.,
Grünwedelstrasse 9, D-8000 München 50 (DE)**

Geregelter Schweisstakter

Die Erfindung bezieht sich auf einen geregelten Wechselstrom- oder Drehstrom-Schweisstakter, bei dem mit Hilfe von im Primärkreis eines Schweisstransformators liegenden, antiparallel geschalteten, elektronischen Schaltern der Schweissstrom in Abhängigkeit schweisstechnischer Einflussgrössen geregelt wird, wobei die im Primärkreis des Schweisstransformators liegenden elektronischen Schalter das Stellglied in einem geschlossenen Regelkreis bilden und zwischen Regler und Stellglied eine Steuerung für die elektronischen Schalter vorgesehen ist.

Ein geregelter Wechselstrom-Schweisstakter dieser Art ist beispielsweise durch die DE-OS 2 219 229 bekanntgeworden. Bei diesem wird als Einflussgrösse die Leistung benutzt. Hierbei werden der Strom und die Spannung kontinuierlich gemessen und multipliziert. Die Multiplikationsgrössen werden für die Zeitdauer einer oder mehrerer Halbwellen integriert und am Ende der Integrationszeit einer Regelvorrichtung zugeführt, welche über eine Phasenanschnittsteuerung die das Stellglied bildenden elektronischen Schalter ansteuern.

Bei diesem und anderen bekannten Wechselstrom-Schweisstaktern kann die Stellgrösse frühestens erst für die folgende Halbwelle wirksam werden. Ausserdem wird durch Verstellen des Phasenanschnitts die Stromzeit, die Amplitude und die Strompause zwischen den Halbwellen geändert. Aus diesem Grunde ist dieses Prinzip für Kurzzeitschweissungen mit wenigen Perioden nicht sinnvoll, weil in diesem Falle eine gemessene Regelgrösse, z.B. der Effektivwert oder der Scheitelwert des Stromes von einer Halbwelle, am Ausgang des Reglers nur eine einmal wirksame feste Stellgrösse für den Phasenanschnitt frühestens für die folgende Halbwelle liefert.

In der DE-OS 1 440 437 ist ein elektrischer Schweissapparat beschrieben, der es ermöglicht, der Schweissstelle die Schweissenergie in Form von genau vorbestimmten oder identischen Beträgen zuzuführen. Hierbei wird der Schweissstelle die Schweissenergie in kurzen, diskreten Hochstromimpulsen zugeführt, welche einer Gleichstromquelle mit Hilfe eines Schalterkreises entnommen werden. Die mit Hilfe des Schalterkreises entnommenen rechteckförmigen Hochstromimpulse können mit Hilfe einer Programmsteuerung bezüglich Amplitude, Dauer und zeitlichem Abstand voneinander geändert werden. Mit Hilfe eines Vorwahlimpulszählers kann die für einen bestimmten Schweissvorgang erforderliche Anzahl von diesen Hochstromimpulsen vorgegeben werden. Auf diese Weise lassen sich Schweissstromimpulse hoher Genauigkeit reproduzieren.

Der Erfindung liegt die Aufgabe zugrunde, einen geregelten Wechselstrom- oder Drehstrom-Schweisstakter der eingangs beschriebenen Art derart auszubilden, dass die Regelzeitkonstante praktisch beliebig klein gehalten werden kann, so dass auch bei extrem kurzen Schweisszeiten und beliebig grossen Schweissleistungen eine wirksame Regelung möglich ist. Diese Aufgabe wird gemäss der Erfindung dadurch gelöst, dass die das Stellglied bildenden elektronischen Schalter während positiver oder negativer Halbwellen des Wechsel- bzw. Drehstromes mehrmals ein- und ausschaltbar sind, dass die Stellgrösse von dem Regler gebildet wird, dem als Istwert der Momentanwert der Einflussgrösse und als Sollwert der jeweilige Wert eines zeitlich vorgegebenen Verlaufs der Einflussgrösse innerhalb einer Halbwelle zugeführt sind und dass die Steuerung zum mehrmaligen Ein- und Ausschalten der das Stellglied bildenden elektronischen Schalter während einer Halbwelle vorgesehen ist.

Vorzugsweise sind die elektronischen Schalter mit einer wesentlich kleineren Pulszeit als der Schweissstromzeit ein- und ausschaltbar, so dass während jeder Halbwelle bzw. während der gesamten Schweisszeit die Schweissleistung mehrmals verstellt werden kann.

Anhand der Zeichnung, in der mehrere Ausführungsbeispiele im Prinzip dargestellt sind, wird die Erfindung näher erläutert. Es zeigen:

Fig. 1a eine Periode der Netzspannung,

Fig. 1b eine Periode des angeschnittenen Schweissstromes,

Fig. 1c den Verlauf des Schweissstromes bei Pulsregelung gemäss der Erfindung,

Fig. 2 einen Schweisstakter mit Phasenanschnittregelung gemäss Fig. 1b,

Fig. 3 eine Schaltungsanordnung mit Regelung über zwei antiparallel geschaltete Gleichstromsteller zur Durchführung der Regelung nach Fig. 1c.

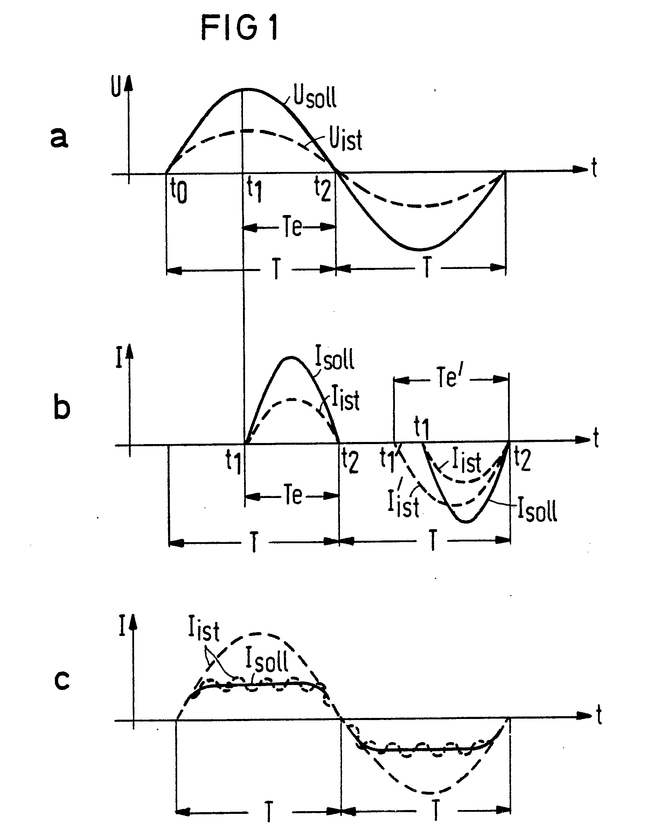

In Fig. 1a ist der Verlauf einer Periode 2T der Netzspannung dargestellt. Hierbei ist mit vollen Linien die Sollspannung $U_{soll}$ und mit gestrichelten Linien die Istspannung $U_{ist}$ dargestellt. Wie Fig. 1b zeigt, beginnt infolge der Phasenanschnittsteuerung der Schweissstrom erst bei $t_1$ zu fliessen. Hierbei ist mit vollen Linien der Sollwert $I_{soll}$ und mit gestrichelten Linien der Istwert $I_{ist}$ dargestellt. Mit Te ist die Stromzeit bezeichnet. Da Soll- und Istwert nicht übereinstimmen, muss die Regelung eingreifen. Da der Istwert kleiner als der Sollwert ist, muss der Zündzeitpunkt vorverlegt werden, und zwar von $t_1$ nach $t'_1$. Damit ändert sich die Stromzeit von Te auf Te'. Dies ist in Fig. 1b für die negative Halbwelle dargestellt. Es ergibt sich somit ein Verlauf des Schweissstromes $I'_{ist}$, wie in Fig. 1b mit gestrichelten Linien dargestellt ist. Wie zuvor bereits ausgeführt worden ist, kann man durch Verändern des Phasenanschnitts eines Wechselstrom- oder Drehstromtakters sinnvoll nur grössere Schweisszeiten (viele Perioden) regeln, weil die Regelung erst frühestens für die folgende Halbwelle (in Fig. 1b für die negative Halbwelle) wirksam werden kann. Wie aus Fig. 1b weiter zu ersehen ist, werden durch Verstellen des Phasenanschnitts ausser der Stromzeit (von Te auf Te') auch noch die Amplitude (Scheitelwert) und der Effektivwert des Schweissstromes geändert.

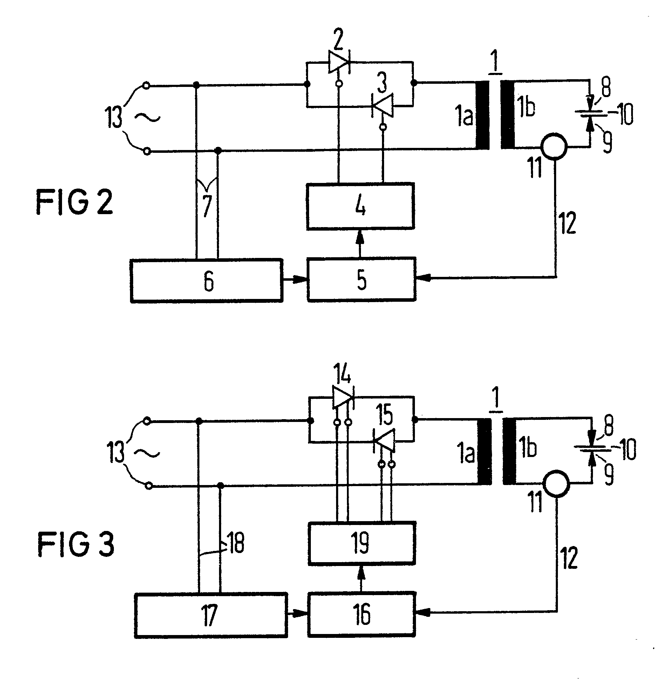

Fig. 2 zeigt das Prinzip eines auf diese Weise geregelten Schweisstakters. Mit 1 ist ein an sich bekannter Schweisstransformator bezeichnet, dessen Primärwicklung 1a über antiparallel geschaltete Thyristoren 2 und 3 mit Klemmen 13 verbunden ist, an welche eine Wechselstromquelle gelegt ist. Die Thyristoren 2 und 3 werden wechselweise über eine Steuerung 4 von einem Regler 5 angesteuert. Der Regler 5 erhält seinen Sollwert von einem Sollwertgeber 6, der netzsynchronisiert ist, wie durch die beiden Leitungen 7 angedeutet ist. Als Sollwert kann der Schweissstrom, die Schweissspannung, die Schweissleistung und/oder der Schweisswiderstand vorgegeben sein.

Die Sekundärwicklung 1b ist mit Schweisselektroden 8 und 9 verbunden, zwischen denen die zu verschweissenden Teile 10 eingelegt sind. Die Schweisselektroden 8 und 9 werden mit einer bestimmten vorgegebenen Kraft gegen die zu verschweissenden Teile 10 gepresst. Mit 11 ist ein Stromwandler angedeutet, der den Istwert des Stromes liefert. Dieser wird über eine Leitung 12 dem Regler 5 zugeführt. Der Regler 5 vergleicht den Sollwert mit dem Istwert des Schweissstroms und bestimmt dadurch den Öffnungszeitpunkt $t_1$ der Thyristoren 2 und 3 gemäss Fig. 1b.

Wie bereits eingangs erwähnt, kann die Stellgrösse des Reglers 5 der Steuerung 4 erst für eine der folgenden Halbwellen wirksam werden. Dies ergibt eine relativ grosse Regelzeitkonstante, so dass dieses Regelungsprinzip nur dann einsetzbar ist, wenn für den Schweissvorgang eine grössere Zahl von Strom-Halbwellen sinnvoll sind.

Bei kürzeren Schweisszeiten muss die Regelzeitkonstante so klein sein, dass während jeder Halbwelle bzw. während der gesamten Schweisszeit die Schweissleistung mehrmals verstellt werden kann. Dies wird gemäss der Erfindung durch einen gepulsten Schalterbetrieb ermöglicht, und zwar durch öfteres Ein- und Ausschalten der elektronischen Schalter. Das Prinzip einer solchen Schaltung ist in Fig. 3 dargestellt. Der wesentliche Unterschied gegenüber der Schaltung nach Fig. 2 besteht darin, dass die elektronischen Schalter 2 und 3 durch zwei antiparallel geschaltete Gleichstromsteller 14 und 15 ersetzt sind. Gleichstromsteller sind beispielsweise beschrieben in dem Taschenbuch «Hütte» Elektrische Energietechnik, Bd. 2, Geräte, 29. Auflage, S. 118–124. Hierbei kann der Schweisstransformator 1 den für die Strom- und Spannungstransformation bei Gleichstromstellern erforderlichen magnetischen Energiespeicher bilden. Die Gleichstromsteller 14 und 15 in Fig. 3 können beliebige Löschzweige aufweisen, wodurch sich ein unterschiedliches Verhalten des Gleichstromstellers 13 erzielen lässt. Vorzugsweise enthalten sie Thyristoren, und zwar neben einem Hauptthyristor noch einen Löschthyristor. Auf diese Weise ergeben sich dann verschiedene Steuerungsmöglichkeiten. So kann beispielsweise eine Pulsbreitensteuerung dadurch erzielt werden, dass die Puls-Pausenzeit konstant gehalten wird, während die Einschaltzeit zwischen Zünden des Hauptthyristors und Zünden des Löschthyristors verändert wird. Bei einer Pulsfolgesteuerung wird die Einschaltzeit zum Zünden des Hauptthyristors und zum Zünden des Löschthyristors konstant gehalten, während die Puls-Pausenzeit verändert wird. Besonders vorteilhaft ist jedoch, wenn die Gleichstromsteller nach Art einer Zweipunktregelung arbeiten. Bei dieser werden die Zünd- und Löschzeitpunkte vom Augenblickswert der Einflussgrösse, z. B. des Stroms oder der Spannung, abhängig gemacht. Der Löschthyristor wird dann gezündet, wenn der Strom oder die Spannung einen vorgegebenen Sollwert überschreitet, während der Hauptthyristor gezündet wird, wenn der Sollwert unterschritten wird. Eine solche Regelung ist beispielsweise in Fig. 1c dargestellt. Mit $I_{ist}$ ist der nicht geregelte Schweissstrom bezeichnet. Mit einer ausgezogenen Linie $I_{soll}$ wird ein bestimmter Sollwert des Schweissstroms vorgegeben, um den dann der Istwert $I'_{ist}$ des Stromes pulsierend schwankt.

Wie bei dem Ausführungsbeispiel nach Fig. 2 wird auch bei dem Ausführungsbeispiel nach Fig. 3 über einen Stromwandler 11 der Istwert des Schweissstroms gemessen, der einem Regler 16 zugeführt wird, welcher hier jedoch von einem Kurvenform-Sollwertgeber 17 seinen Sollwert erhält. Der Sollwertgeber 17 muss bei einem Wechselstromtakter ebenfalls mit der Netzspannung synchronisiert werden, was durch Leitungen 18 angedeutet ist. Über eine Steuerung 19 erhalten die Gleichstromsteller 14 und 15 ihre entsprechenden Steuerungsbefehle.

Das gleiche Prinzip kann auch bei Drehstromtaktern für Frequenzwandler- oder Gleichrichtermaschinen verwendet werden. Auch können anstelle von Thyristoren Ignitrons oder Thyratrons oder auch Leistungstransistoren verwendet werden, die im Schalterbetrieb arbeiten.

**Patentansprüche**

1. Geregelter Wechselstrom- oder Drehstrom-Schweisstakter, bei dem mit Hilfe von im Primärkreis eines Schweisstransformators (1) liegenden, antiparallel geschalteten, elektronischen Schaltern (14, 15) der Schweissstrom in Abhängigkeit schweisstechnischer Einflussgrössen geregelt wird, wobei die im Primärkreis des Schweisstransformators (1) liegenden elektronischen Schalter (14, 15) das Stellglied in einem geschlossenen Regelkreis bilden und zwischen Regler (16) und Stellglied eine Steuerung (19) für die elektronischen Schalter (14, 15) vorgesehen ist, dadurch gekennzeichnet, dass die das Stellglied bildenden elektronischen Schalter (14 und 15) so ausgebildet sind, dass sie während positiver oder negativer Halbwellen des Wechsel- bzw. Drehstromes mehrmals ein- und ausschaltbar sind, dass die Stellgrösse von dem Regler (16) gebildet wird, dem als Istwert der Momentanwert der Einflussgrösse und als Sollwert der jeweilige Wert eines zeitlich vorgegebenen Verlaufs der Einflussgrösse innerhalb einer Halbwelle zugeführt sind und dass die Steuerung (19) zum mehrmaligen Ein- und Ausschalten der das Stellglied bildenden elektronischen Schalter (14 und 15) während einer Halbwelle vorgesehen ist.

2. Schweisstakter nach Anspruch 1, dadurch gekennzeichnet, dass als elektronische Schalter (14, 15) löschbare Stromrichterventile oder Anordnungen aus nicht löschbaren Stromrichterventilen verwendet sind, die durch Abschalten des Stromes in den nicht leitenden Zustand zurückgeführt werden können und die nach Art von Gleichstromstellern arbeiten.

3. Anordnung nach einem der Ansprüche 1 bis 2, dadurch gekennzeichnet, dass die elektronischen Schalter (14, 15) mit einer wesentlich höheren Pulsfrequenz als der Netz- bzw. Schweisspulsfrequenz schaltbar sind.

## Claims

1. A regulated single-phase or three-phase a.c. welding timer wherein the welding current is regulated in dependence upon factors of influence relating to welding, with the aid of electronic switches (14, 15) arranged in a primary circuit of a welding transformer (1) and switched antiparallel, where the electronic switches (14, 15) arranged in the primary circuit of the welding transformer (1) form the regulating element in a closed regulating circuit and where a control unit (19) for the electronic switches (14, 15) is arranged between the regulator (16) and the regulating element, characterised in that the electronic switches (14, 15) forming the regulating element are so designed that they can be repeatedly switched on and off during positive or negative half-waves of the single-phase or three-phase a.c. current, that the regulating magnitude is formed by the regulator (16) to which is fed the instantaneous value of the factor of influence as an actual value and with the respective value of a course, predetermined with respect to time, of the factor of influence within a half-wave as a theoretical value, and that there is provided the control unit (19) which serves to repeatedly switch on and off the electronic switches (14 and 15) forming the regulating element during a half-wave.

2. A welding timer as claimed in Claim 1, characterised in that quenchable current rectifier valves or arrangements of non-quenchable current rectifier valves are used as electronic switches (14, 15) which valves can be restored to the non-conductive state by switching off the current and which operate in the manner of direct current regulators.

3. An arrangement as claimed in one of Claims 1 to 2, characterised in that the electronic switches (14, 15) are switchable at a pulse frequency substantially higher than the mains or welding pulse frequency, as the case may be.

## Revendications

1. Temporisateur synchrone de soudage régulé à courant alternatif ou triphasé, dans lequel le courant de soudage est régulé en fonction de valeurs d'influence de la technique de soudage à l'aide de commutateurs électroniques (14, 15) montés en antiparallèle, se trouvant dans le circuit primaire d'un transformateur de soudage (1), les commutateurs électroniques (14, 15) se trouvant dans le circuit primaire du transformateur de soudage (1) formant l'élément de réglage dans un circuit de régulation fermé, et une commande (19) pour les commutateurs électroniques (14, 15) étant prévue entre le régulateur (16) et l'élément de réglage, caractérisé par le fait que les commutateurs électroniques (14 et 15) formant l'élément de réglage sont agencés de manière à pouvoir être fermés et ouverts plusieurs fois pendant des alternances positives ou négatives du courant alternatif ou triphasé, que la grandeur de réglage est formée par le régulateur (16) auquel sont appliquées la valeur instantanée de la valeur d'influence en tant que valeur réelle et la valeur respective d'une allure prédéterminée dans le temps de la valeur d'influence à l'intérieur d'une alternance en tant que valeur de consigne, et que la commande (19) est prévue pour fermer et ouvrir plusieurs fois les commutateurs électroniques (14 et 15), formant l'élément de réglage, pendant une alternance.

2. Temporisateur synchrone de soudage suivant la revendication 1, caractérisé par le fait que des soupapes électriques convertisseuses extinctibles ou des dispositifs constitués par des soupapes électriques convertisseuses non extinctibles, qui peuvent être ramenés dans l'état non conducteur par suppression du courant et qui travaillent à la manière de convertisseurs directs de courant continu, sont utilisés comme commutateurs électroniques (14, 15).

3. Dispositif suivant l'une des revendications 1 à 2, caractérisé par le fait que les commutateurs électroniques (14, 15) peuvent être commutés avec une fréquence d'impulsions nettement plus importante que la fréquence d'impulsions de soudage ou du réseau.

# FIG 1

a

b

c

FIG 2

FIG 3

7